# EUROPÄISCHE PATENTANMELDUNG

(11) **EP 4 506 867 A1**
(43) Veröffentlichungstag der Anmeldung: **12.02.2025**
(21) Anmeldenummer: 23190982.1
(22) Anmeldetag: 11.08.2023
(51) Int. Cl.: G06N 10/80

(54) **VERFAHREN UND VORRICHTUNG ZUM COMPUTERIMPLEMENTIERTEN VERARBEITEN EINER QUANTENSCHALTUNG AUF EINER QUANTENVERARBEITUNGSEINHEIT**

(71) Anmelder: Siemens Aktiengesellschaft, 80333 München (DE)
(72) Erfinder: Niedermeier, Christoph, 80999 München (DE); Safi, Hila, 81829 München (DE); Schwenzow, Tilmann Moritz, 73730 Esslingen (DE); Wintersperger, Karen, 80804 München (DE); von Sicard, Oliver, 81541 München (DE)
(74) Vertreter: Siemens Patent Attorneys

(57) **Zusammenfassung**

Bei dem Verfahren zum computerimplementierten Verarbeiten einer Quantenschaltung (QS) auf einer Quantenverarbeitungseinheit (21, 31, 41, 42) mit einer Analyseeinheit (10) führt letztere durch:
a) Ermitteln eines Satzes an Kennzahlen (SKZ) der Quantenschaltung (QS), wobei eine jeweilige Kennzahl (KZ1,...,KZn) eine Anforderung der Quantenschaltung (QS) an die Quantenverarbeitungseinheit zu deren Verarbeitung beschreibt;
b) Abbildung der Quantenschaltung (QS), jeweils auf eine erste Quantenverarbeitungseinheit (21) und zumindest eine zweite Quantenverarbeitungseinheit (31, 41, 42), wobei die erste Quantenverarbeitungseinheit (21) und die zumindest eine zweite Quantenverarbeitungseinheit (31, 41, 42) durch jeweilige, sich unterscheidende Leistungsparameter (LP(21), LP(31), LP(41, 42)) charakterisiert sind;
c) Bestimmen zumindest eines jeweiligen Qualitätsparameters (QP(21), QP(31), QP(41, 42)) für die erste Quantenverarbeitungseinheit (21) und die zumindest eine zweite Quantenverarbeitungseinheit (31, 41, 42) aus einer Abschätzung;
d) Auswahl der ersten oder einer der zumindest einen zweiten Quantenverarbeitungseinheit (31, 41, 42) als ausgewählte Quantenverarbeitungseinheit (31A) abhängig vom Ergebnis eines Vergleichs der in Schritt d) bestimmten Qualitätsparameter (QP(21), QP(31), QP(41, 42)).

## Beschreibung

Die Erfindung betrifft ein Verfahren und eine Vorrichtung zum computerimplementierten Verarbeiten einer Quantenschaltung auf einer Quantenverarbeitungseinheit.

Quantencomputing stellt ein neues Paradigma in der Datenverarbeitung dar, das die grundlegenden Prinzipien der Quantenmechanik zur Durchführung von Berechnungen nutzt. Während ein herkömmlicher Computer mit Bits arbeitet, die jeweils eine der beiden diskreten Zustände 0 oder 1 annehmen können, verwendet ein Quantencomputer sogenannte Quantenbits (Qubits). Ein Qubit kann dabei nicht nur einen von zwei Quantenzuständen |0> oder |1> annehmen, sondern auch jede beliebige Überlagerung (Linearkombination) dieser beiden Zustände. Eine derartige Linearkombinationen wird auch als Superposition oder Überlagerungszustand bezeichnet.

Algorithmen und Anwendungen, die quantenmechanische Ressourcen nutzen, können einfach und effizient durch sogenannte Quantenschaltungen (quantum circuits) dargestellt werden. Eine Quantenschaltung ist eine Berechnungsroutine, die aus kohärenten Quantenoperationen auf Quantenbits besteht. Eine Quantenschaltung wird auf einem Quantencomputer zur Ausführung gebracht und kann durch weitere Anweisungen auf einem klassischen Rechner ergänzt werden. In diesem Fall spricht man von einem hybriden Algorithmus. Ein derartiger Algorithmus kann dabei auch iterativ angelegt sein, das heißt aus sich wiederholenden klassischen und Quanten-Anteilen bestehen.

Quantenschaltungen ermöglichen es einer Quantenverarbeitungseinheit, klassische Informationen aufzunehmen und eine klassische Lösung auszugeben, wobei die Quantenverarbeitungseinheit Quantenprinzipien wie Interferenz und Verschränkung (entanglement) zur Durchführung der Berechnung nutzt..

Derzeit existierende Quantencomputer, die eine oder mehrere Quantenverarbeitungseinheiten umfassen, verwenden sehr unterschiedliche Technologien, um Qubits und ihre Interaktionen zu repräsentieren. Einige der bekanntesten Technologien sind supraleitende Schaltungen, Ionenfallen und photonische Schaltkreise. Andere Ansätze basieren auf neutralen Atomfallen, Qubits auf Diamantbasis oder Quantenpunkte.

Die für die Implementierung der Qubits gewählte Technologie bestimmt die Technologie, die zum Ansteuern und Auslesen der Qubits Quantenverarbeitungseinheit (Quantum Processing Unit, QPU) benötigt wird. Während sich die Eigenschaften von Quantenverarbeitungseinheiten in Bezug auf die Anzahl der Qubits und die Fehlerraten in der Zukunft deutlich verbessern dürften, sind Eigenschaften wie Kohärenzzeit, eine Gatter-Operationszeit und eine Konnektivität stärker von der Wahl der verwendeten Technologie abhängig, aber können sich ebenfalls im Lauf der Zeit verbessern. Die Kohärenzzeit beschreibt, wie lange Informationen in einem Qubit gespeichert und genutzt werden können, bevor eine so genannte Dekohärenz eintritt und die gespeicherten Informationen verloren gehen. Die Gatter-Operationszeit ist im Wesentlichen für die Dauer der Ausführung einer Quantenschaltung ausschlaggebend. Die Konnektivität beschreibt, mit wie vielen weiteren Qubits ein bestimmtes Qubit direkt wechselwirken bzw. interagieren kann.

Während supraleitende Qubits kurze Gatter-Operationszeiten im Bereich einiger Nanosekunden haben, ist die Kohärenzzeit vor der Dekohärenz vergleichsweise kurz und liegt im Mikrosekundenbereich. Ihre Konnektivität ist auf benachbarte Qubits beschränkt, wobei in einer quadratischen Gittergeometrie ein Qubit höchstens vier Nachbarn haben kann.

Im Gegensatz dazu sind die Gatteroperationszeiten für Qubits, die durch Ionenfallen repräsentiert werden, vergleichsweise langsam (im Bereich von Mikrosekunden), diese Qubits haben aber andererseits eine vergleichsweise lange Kohärenzzeit im Bereich von Minuten und eine All-to-All-Konnektivität.

Neben den genannten Unterschieden sind auch die Skalierbarkeit und damit die Kosten für die Ausführung einer Quantenschaltung sowie die Betriebsbedingungen, unter denen jeweilige Quantenverarbeitungseinheiten betrieben werden, stark von der Technologie abhängig.

Verschiedene Arten von Quantenverarbeitungseinheiten können unterschiedliche Modelle der Quantenberechnung implementieren. Die Quantenberechnung kann beispielsweise gatterbasiert, messungsbasiert ablaufen oder sogenannte topologische Qubits nutzen. Quantencomputer, deren Quantenverarbeitungseinheiten auf photonischen Schaltkreisen basieren, nutzen in der Regel messungsbasierte Quantenberechnungen.

Diese unterschiedlichen Eigenschaften von Quantencomputern haben zur Folge, dass bei der Verwendung von Quantenverarbeitungseinheiten die Anforderungen an die Eigenschaften des physikalischen Systems von dem Algorithmus abhängen, der das zu lösende Problem löst. Um eine effiziente Nutzung der Ressourcen einen Quantenverarbeitungseinheit sicherzustellen, wird in der Regel, eine manuelle Anpassung der Quantenschaltung an die verwendete Quantenverarbeitungseinheit vorgenommen. Ebenso werden hardwarespezifische Compiler, die aus dem zu lösenden Problem die Quantenschaltung erzeugen, eingesetzt.

Es ist Aufgabe der Erfindung, ein Verfahren und eine Vorrichtung anzugeben, welche die Verarbeitung einer Quantenschaltung einer Quantenverarbeitungseinheit effizienter ermöglichen.

Diese Aufgaben werden gelöst durch ein Verfahren gemäß den Merkmalen des Anspruches 1, ein Computerprogrammprodukt gemäß den Merkmalen des Anspruches 13 und eine Vorrichtung gemäß den Merkmalen des Anspruches 14. Vorteilhafte Ausgestaltungen ergeben sich aus den abhängigen Ansprüchen.

Gemäß einem ersten Aspekt wird ein Verfahren zum computerimplementierten Verarbeiten einer Quantenschaltung auf einer Quantenverarbeitungseinheit vorgeschlagen. Bei diesem Verfahren werden durch eine Analyseeinheit, die eine Recheneinheit oder eine auf einer Recheneinheit ablaufende Software sein kann, folgende Schritte durchgeführt.

In einem Schritt a) erfolgt das Ermitteln eines Satzes an Kennzahlen der Quantenschaltung, wobei eine jeweilige Kennzahl eine Anforderung der Quantenschaltung an die Quantenverarbeitungseinheit zu deren Verarbeitung beschreibt. Insbesondere umfasst der Satz an Kennzahlen eine oder mehrere der folgenden Eigenschaftsparameter: eine benötigte Prozessorleistung zur Ausführung der Quantenschaltung; einen benötigten Arbeitsspeicher; eine Anzahl an benötigten Qubits; Eigenschaften der Qubits. Eigenschaften der Qubits können beispielsweise kurze oder lange Gatter-Operationszeiten oder eine Kohärenzzeit vor der Dekohärenz oder die Konnektivität zu benachbarten Qubits sein.

In einem Schritt b) erfolgt eine Abbildung der Quantenschaltung, und zwar jeweils auf eine erste Quantenverarbeitungseinheit und zumindest eine zweite Quantenverarbeitungseinheit. Die erste Quantenverarbeitungseinheit und die zumindest eine zweite Quantenverarbeitungseinheit sind durch jeweilige, sich unterscheidende Leistungsparameter charakterisiert. Die erste Quantenverarbeitungseinheit und die zumindest eine zweite Quantenverarbeitungseinheit sind Quantenverarbeitungseinheiten, die zur Ausführung der Quantenschaltung grundsätzlich in Betracht kommen.

Es ist zu betonen, dass in diesem Schritt b) die Quantenschaltung jeweils vollständig auf die erste Quantenverarbeitungseinheit und die eine oder mehrere zweite Quantenverarbeitungseinheit abgebildet wird. Eine aufgeteilte Abbildung der Quantenschaltung auf die erste Quantenverarbeitungseinheit und die zumindest eine zweite Quantenverarbeitungseinheit ist an dieser Stelle nicht vorgesehen.

Insbesondere umfasst der Leistungsparameter der ersten sowie der zumindest einen zweiten Quantenverarbeitungseinheit eine oder mehrere der folgenden Parameter: eine Prozessorleistung; einen Arbeitsspeicher; eine Anzahl an Qubits; Eigenschaften der Qubits (Gatter-Operationszeiten, Kohärenzzeit vor Dekohärenz, Konnektivität zu anderen Qubits), eine Vernetzungsrate der Qubits; eine Fehlerrate für jeweilige Gatter-Operationen; eine Kohärenzzeit.

In einem Schritt c) erfolgt das Bestimmen zumindest eines jeweiligen Qualitätsparameters für die erste Quantenverarbeitungseinheit und die zumindest eine zweite Quantenverarbeitungseinheit aus einer Abschätzung, indem eine Ausführung der Quantenschaltung sowohl auf der ersten Quantenverarbeitungseinheit als auch auf der zumindest einen zweiten Quantenverarbeitungseinheit simuliert und ein Maß für die Erfüllung der Kennzahlen des Satzes an Kennzahlen bestimmt wird.

Als Qualitätsparameter der ersten sowie der zumindest einen zweiten Quantenverarbeitungseinheit sind insbesondere einer oder mehrere der folgenden Parameter umfasst: eine erwartete Fehlerrate; eine Schaltungstiefe; eine Vernetzungsrate der Qubits; eine erwartete Dauer der Ausführung der Quantenschaltung; eine Ergebnisqualität; erwartete Kosten für die Ausführung der Quantenschaltung. Mit anderen Worten wird in diesem Schritt c) bestimmt, inwieweit eine jeweilige Quantenverarbeitungseinheit mit ihrem physikalisch bedingten Eigenschaften, die durch Leistungsparameter charakterisiert sind, geeignet ist, die Quantenschaltung auszuführen.

In Schritt d) erfolgt die Auswahl der ersten oder einer der zumindest einen zweiten Quantenverarbeitungseinheiten als ausgewählte Quantenverarbeitungseinheit abhängig vom Ergebnis eines Vergleichs der in Schritt c) bestimmten Qualitätsparameter. Mit anderen Worten wird in Schritt d) die zur Ausführung der Quantenschaltung am besten geeignete Quantenverarbeitungseinheit ermittelt. Diese stellt dann die ausgewählte Quantenverarbeitungseinheit dar.

In Schritt e) erfolgt schließlich eine Übertragung der Quantenschaltung an die ausgewählte Quantenverarbeitungseinheit zu deren Verarbeitung.

Das erfindungsgemäße Vorgehen basiert auf der Überlegung, dass bei der Verwendung von Quantenverarbeitungseinheiten die Anforderungen an die Eigenschaften des physikalischen Systems vom Algorithmus abhängen, der die zu lösende, spezifische Aufgabe löst. Dies kann bisweilen zu einer ineffizienten Nutzung der Ressourcen einer Quantenverarbeitungseinheit führen, wenn deren Eigenschaften nicht mit den erforderlichen Eigenschaften der Quantenschaltung übereinstimmen. Beispielsweise profitiert eine Quantenschaltung, in der viele Qubits miteinander interagieren, von einer hohen Konnektivität, während eine Quantenschaltung mit einer hohen Tiefe, d.h. der größten Anzahl von Gattern vom Eingang zum Ausgang, von kleinen Gatter-Operationszeiten, niedrigen Fehlerraten und einer längeren Kohärenzzeit profitiert. Ob eine Quantenschaltung auf einer bestimmten Quantenverarbeitungseinheit effizient ausgeführt werden kann, hängt somit von der Technologie der Quantenverarbeitungseinheit ab. Es kann sogar unmöglich sein, eine Quantenschaltung mit bestimmten Eigenschaften auf einer dafür ungeeigneten Quantenverarbeitungseinheit ablaufen zu lassen.

Das vorgeschlagene Verfahren behebt dieses Problem, indem zur Ausführung einer Quantenschaltung ein computerimplementiertes Verfahren genutzt wird, das für die Ausführung der Quantenschaltung die dafür bestmögliche Quantenverarbeitungseinheit ermittelt.

Das Verfahren bedient sich dabei der Analyseeinheit, die die Eigenschaften der Quantenschaltung ermittelt (analysiert), bevor sie die Quantenschaltung an eine ausgewählte Quantenverarbeitungseinheit weiterleitet. Die Analyseeinheit ermittelt, wie sich die Abbildung der Quantenschaltung auf eine bestimmte Quantenverarbeitungseinheit, z.B. in Bezug auf eine endgültige Schaltungstiefe, erforderliche Konnektivität und erwartete Fehlerrate auswirken würde. Darüber hinaus berücksichtigt die Analyseeinheit Parameter, wie die erwartete Dauer der Schaltkreisausführung, Qualität der Lösung, geschätzte Kosten für die Ausführung der Berechnung auf der Quantenverarbeitungseinheit und dergleichen. Abhängig von diesen Parametern wird dann durch die Analyseeinheit eine geeignete Quantenverarbeitungseinheit aus einer Anzahl verfügbarer Quantenverarbeitungseinheit mit unterschiedlichen Technologien ausgewählt. Die Aufgabe bzw. die daraus ermittelte Quantenschaltung wird dann an die ausgewählte Quantenverarbeitungseinheit weitergeleitet und dort gelöst.

In einer zweckmäßigen Ausgestaltung wird durch den Vergleich diejenige Quantenverarbeitungseinheiten mit den besten Qualitätsparameter als ausgewählte Quantenverarbeitungseinheit bestimmt. Hierzu können beispielsweise unmittelbar die in Schritt c) ermittelten Maße für die Erfüllung der Kennzahlen verarbeitet werden. Beispielsweise können die ermittelten Maße in Bezug auf die jeweiligen Kennzahlen verglichen werden oder eine Kombination für die Gesamtanzahl der Kennzahlen des Satzes an Kennzahlen verarbeitet werden.

In einer weiteren zweckmäßigen Ausgestaltung ist vorgesehen, dass die Leistungsparameter der ersten sowie der zumindest einen zweiten Quantenverarbeitungseinheit aus einer Datenbank eingelesen werden. Die Leistungsparameter können dort vorab in diese eingespeichert werden. Es ist zweckmäßig, wenn die Leistungsparameter ständig aktualisiert werden und insbesondere Leistungsparameter "neuer" Quantenverarbeitungseinheiten in der Datenbank berücksichtigt werden.

Eine weitere zweckmäßige Ausgestaltung sieht vor, dass die Leistungsparameter der ersten sowie der zumindest einen zweiten Quantenverarbeitungseinheit aktualisiert werden.

Insbesondere wird die sich aus Schritt e)ergebende Lösung zur Aktualisierung der Leistungsparameter der ausgewählten Quantenverarbeitungseinheit verarbeitet. Auf diese Weise ist es möglich, die bei der Durchführung des erfindungsgemäßen Verfahrens gewonnenen Erkenntnisse für zukünftige Verarbeitungen zu nutzen.

In einer weiteren zweckmäßigen Ausgestaltung wird die Quantenschaltung durch die Analyseeinheit eingelesen. Mit anderen Worten wurde die Quantenschaltung durch eine von der Analyseeinheit getrennte Recheneinheit aus einem zu lösenden Problem erzeugt. Alternativ kann die Quantenschaltung durch die Analyseeinheit aus dem zu lösenden Problem eigenständig generiert werden. Zu diesem Zweck ist die Analyseeinheit dazu ausgebildet, mithilfe eines klassischen Algorithmus die Beschreibung der Quantenschaltung aus dem zu lösenden Problem zu erzeugen.

Eine weitere zweckmäßige Ausgestaltung sieht vor, dass ein zu lösendes Problem in mehrere Teilprobleme aufgeteilt wird, wobei das oben beschriebene Verfahren für jedes Teilproblem getrennt durchgeführt wird. Die Teilprobleme werden zweckmäßigerweise so verteilt, dass jedes Teilproblem unter Berücksichtigung der besonderen Eigenschaften jeder Quantenverarbeitungseinheit optimal gelöst werden kann. Die Teilprobleme können unabhängig voneinander sein oder eine Verschränkung untereinander aufweisen. Bei verschränkten Teilproblemen wird auch eine Verschränkung der jeweils ausgewählten Quantenverarbeitungseinheiten vorgenommen. Das diesbezügliche Vorgehen ist dem Fachmann aus dem Stand der Technik bekannt.

Die Analyseeinheit kann somit als lernendes System konzipiert werden, das sich mit der Zeit verbessert, indem es die Vorteile des gewählten Ansatzes auswertet und dieses Wissen in der Datenbank abspeichert. Die regelmäßige Aktualisierung der Analyseeinheit und/oder der Inhalte der Datenbank ermöglichen die Berücksichtigung aktueller technologischer und wissenschaftlicher Entwicklungen von Quantencomputer-Hardware.

Gemäß einem zweiten Aspekt wird ein Computerprogrammprodukt vorgeschlagen, das Befehle umfasst, die bei der Ausführung des Programms durch einen Computer diesen veranlassen, das Verfahren gemäß einer oder mehrerer Ausgestaltungsvarianten auszuführen.

Es wird ferner eine Vorrichtung zum Verarbeiten einer Quantenschaltung aus einer Quantenverarbeitungseinheit vorgeschlagen, wobei die Analyseeinheit dazu ausgebildet ist, das soeben beschriebene Verfahren gemäß einer oder mehrerer Ausgestaltungsvarianten durchzuführen.

Die Erfindung wird nachfolgend näher anhand eines Ausführungsbeispiels in der Zeichnung erläutert. Es zeigen:
- Fig. 1: eine schematische Darstellung eines ersten Ausführungsbeispiels einer erfindungsgemäßen Vorrichtung zum Verarbeiten einer Quantenschaltung auf einer Quantenverarbeitungseinheit; und
- Fig. 2: eine schematische Darstellung eines zweiten Ausführungsbeispiels einer erfindungsgemäßen Vorrichtung zum Verarbeiten einer Quantenschaltung auf einer Quantenverarbeitungseinheit.

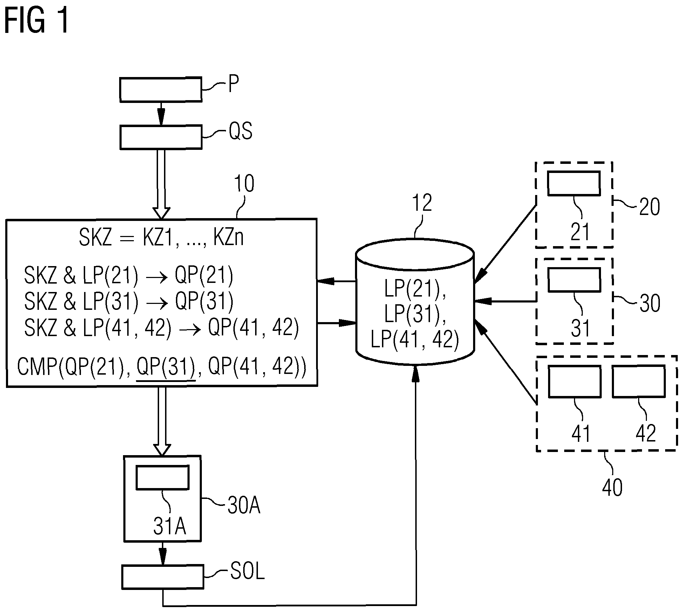

Fig. 1 zeigt in einer schematischen Darstellung ein erstes Ausführungsbeispiel einer erfindungsgemäßen Vorrichtung zum Verarbeiten einer Quantenschaltung QS auf einer ausgewählten Quantenverarbeitungseinheit 31A eines (ausgewählten) Quantencomputers 30A. Die zu verarbeitende Quantenschaltung QS ist durch einen nicht näher dargestellten klassischen Algorithmus aus einem zu lösenden Problem P erzeugt.

Zur Verarbeitung der Quantenschaltung QS steht grundsätzlich eine Mehrzahl an Quantenverarbeitungseinheiten 21, 31, 41, 42, welche Bestandteil jeweiliger Quantencomputer 20, 30, 40 sind, zur Verfügung. Die Quantencomputer 20, 30, 40 und die darin enthaltenen Quantenverarbeitungseinheiten 21, 31, 41 und 42 verwenden unterschiedliche Technologien, um Qubits und ihre Interaktionen zu repräsentieren. Beispielsweise könnte die Quantenverarbeitungseinheit 21 des Quantencomputers 20 auf supraleitenden Schaltungen basieren, während die Quantenverarbeitungseinheit 31 des Quantencomputers 30 auf Ionenfallen basiert. Der Quantencomputer 40 umfasst zwei Quantenverarbeitungseinheiten 41, 42, von denen die Quantenverarbeitungseinheit 41 beispielsweise auf photonischen Schaltkreisen und die Quantenverarbeitungseinheit 42 auf supraleitenden Schaltungen basiert.

Die Art der Qubits bestimmen damit die Technologie, die zum Ansteuern und Auslesen der Qubits in der Quantenverarbeitungseinheit benötigt wird. Davon abhängig sind ebenfalls Eigenschaften, wie Kohärenzzeit, Gatter-Operationszeiten und Konnektivität. Die Anforderungen an die Eigenschaften einer Quantenverarbeitungseinheit hängt damit von der Quantenschaltung QS ab, die das zu lösende Problem P löst. Die nachfolgenden hier im Detail beschriebene Vorrichtung und das damit verbundene Verfahren ermöglichen eine effiziente Nutzung der Ressourcen durch Auswahl der bestmöglichen Quantenverarbeitungseinheit für die zu verarbeitende Quantenschaltung.

Allgemein profitiert eine Quantenschaltung QS, in der viele Qubits miteinander interagieren, von einer hohen Konnektivität, während eine Quantenschaltung QS mit einer hohen Tiefe, d.h. einer großen Anzahl von Gattern vom Eingang zum Ausgang, von kleinen Gatter-Operationszeiten, niedrigen Fehlerraten und einer längeren Kohärenzzeit profitiert. Ob die Quantenschaltung QS effizient ausgeführt werden kann, hängt somit von der Technologie der Quantenverarbeitungseinheit ab.

Zu diesem Zweck ist eine Analyseeinheit 10 vorgesehen, die die Quantenschaltung QS analysiert und einen Satz an Kennzahlen SKZ der Quantenschaltung QS ermittelt, um darauf basierend die am besten geeignete Quantenverarbeitungseinheit zu bestimmen. Der Satz an Kennzahlen SKZ umfasst ein oder mehrere Kennzahlen KZ1, ..., KZn, wobei jede Kennzahl eine spezifische Anforderung der Quantenschaltung QS an die (gesuchte) Quantenverarbeitungseinheit zu deren Verarbeitung beschreibt.

Der Satz an Kennzahlen SKZ umfasst als Kennzahlen KZ1, ..., KZn eine oder mehrere der folgenden Eigenschaftsparameter: eine benötigte Prozessorleistung, einen benötigten Arbeitsspeicher, eine Anzahl an benötigten Qubits, Eigenschaften der Qubits (Vernetzungsrate, Kohärenzzeit, Konnektivität,...).

In der vorliegenden Ausgestaltung wird davon ausgegangen, dass die Analyseeinheit 10 die Quantenschaltung QS einliest und dann den Satz an Kennzahlen SKZ ermittelt. Alternativ könnte die Analyseeinheit 10 auch dazu ausgebildet sein, das zu lösende Problem P einzulesen und daraus mit Hilfe eines klassischen Algorithmus die Beschreibung der Quantenschaltung QS selbst zu erzeugen.

Die Analyseeinheit 10 ist mit einer Datenbank 12 verbunden. In der Datenbank 12 sind jeweilige Leistungsparameter LP (21), LP (31) und LP (41, 42) der grundsätzlich für eine Verarbeitung der Quantenschaltung QS zur Verfügung stehenden Quantenverarbeitungseinheiten 21, 31, 41, 42 bzw. deren Quantencomputer 20, 30, 40 gespeichert.

Die Leistungsparameter LP(x), wobei x für die jeweiligen Quantenverarbeitungseinheiten 21, 31, 41, 42 steht, umfassen beispielsweise eine jeweilige Prozessorleistung, einen Arbeitsspeicher, eine Anzahl an Qubits, die Eigenschaften der Qubits, insbesondere eine Vernetzungsrate, eine Kohärenzzeit, sowie eine Fehlerrate für jeweilige Gatter-Operationen. Neben den genannten Parametern können die Leistungsparameter auch weitere, die jeweilige Quantenverarbeitungseinheit 21, 31, 41, 42 charakterisierende Parameter umfassen.

Die in der Datenbank 12 gespeicherten Leistungsparameter LP (x) können aus Wissensdatenbanken und/oder Erfahrungswerten der Vergangenheit ermittelt worden sein.

Die Analyseeinheit 10 bildet die Quantenschaltung QS in einem nächsten Schritt jeweils auf die für eine Verarbeitung in Frage kommenden Quantenverarbeitungseinheiten 21, 31, 41 und/oder 42 ab. Nach der Abbildung (dem sog. "mapping") wird aus dem Satz an Kennzahlen SKZ und den Leistungsparametern der jeweiligen Quantenverarbeitungseinheiten 21, 31, 41 und/oder 42 für die jeweiligen Quantenverarbeitungseinheiten aus einer Abschätzung zumindest ein jeweiliger Qualitätsparameter QP (21), (31) und QP (41, 42) bestimmt. Der Qualitätsparameter QP(x) umfasst insbesondere eine erwartete Fehlerrate bei der Ausführung der Quantenschaltung QS auf der betreffenden Quantenverarbeitungseinheit, eine Schaltungstiefe, eine Vernetzungsrate der Qubits, eine erwartete Dauer der Ausführung der Quantenschaltung QS, eine Ergebnisqualität und erwartete Kosten für die Ausführung der Quantenschaltung QS.

Die Bestimmung eines jeweiligen Qualitätsparameters QP (x) erfolgt, indem eine Ausführung der Quantenschaltung QS auf den jeweiligen Quantenverarbeitungseinheiten 21, 31, 41, 42 simuliert wird und ein Maß für die Erfüllung der Kennzahlen KZ1, ..., KZn des Satzes an Kennzahlen SKZ bestimmt wird. Der Qualitätsparameters QP (x) repräsentiert das Maß für die Erfüllung der Kennzahlen KZ1, ..., KZn des Satzes an Kennzahlen SKZ.

Anschließend erfolgt eine Auswahl derjenigen Quantenverarbeitungseinheit abhängig vom Ergebnis eines Vergleichs der zuvor bestimmten Qualitätsparameter, was in Fig. 1 durch CMP (QP(21), QP (31), QP (41, 42)) illustriert ist. Der Vergleich CMP bezweckt die am besten geeignete Quantenverarbeitungseinheit für die Ausführung des Quantenschaltung QS zu finden.

Im vorliegenden Ausführungsbeispiel wurde durch den Vergleich CMP die Quantenverarbeitungseinheit 31 des Quantencomputers 30 als am besten geeignet bestimmt, wobei dessen Qualitätsparameter QP(31) unterstrichen hervorgehoben ist. Die Quantenverarbeitungseinheit 31 stellt eine ausgewählte Quantenverarbeitungseinheit 31A dar. Die Quantenschaltung QS wird dann durch die Analyseeinheit 10 an die ausgewählte Quantenverarbeitungseinheit 31A des ausgewählten Quantencomputers 30 (der einen ausgewählten Quantencomputer 30A darstellt) übertragen, um durch diese verarbeitet zu werden.

Aus der Verarbeitung der Quantenschaltung QS durch die ausgewählte Quantenverarbeitungseinheit 31A ergibt sich eine Lösung SOL, deren Ergebnisse dann genutzt werden können, um die Leistungsparameter LP(31) der ausgewählten Quantenverarbeitungseinheit 31A zu aktualisieren. Insbesondere werden Metadaten der Lösung SOL, insbesondere Verarbeitungszeit, Fehlerraten usw.) an die Datenbank 12 und/oder die Analyseeinheit 10 übertragen, damit die gewonnenen Informationen für zukünftige Auswahlen berücksichtigt werden können.

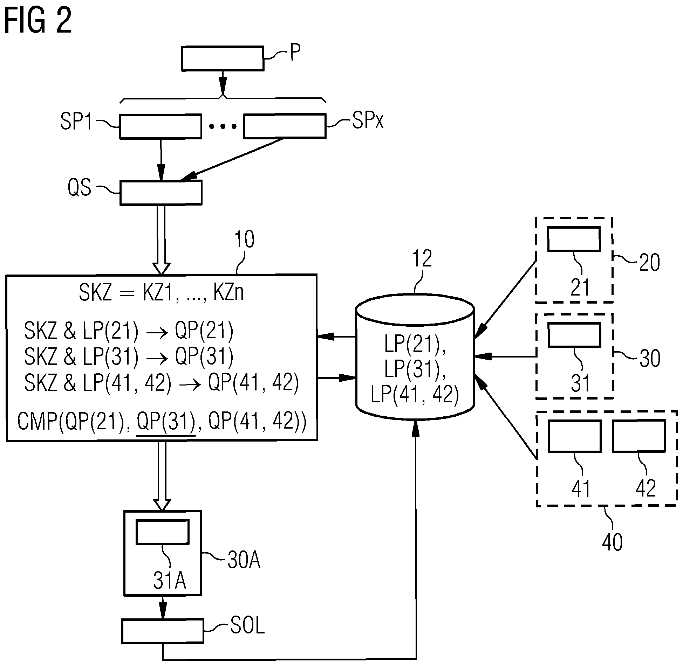

Fig. 2 zeigt ein zweites Ausführungsbeispiel, in dem das zu lösende Problem P in eine Anzahl x an Teilproblemen SP1, ..., SPx unterteilt wird oder werden kann. Eine Unterteilung des zu lösenden Problems P in Teilprobleme SP1, ..., SPx erfolgt vorzugsweise derart, dass die Teilprobleme auf verschiedenen (zu findenden) Quantenverarbeitungseinheiten ausgeführt werden können. Die Teilprobleme SP1, ..., SPx werden so verteilt, dass jedes Teilproblem SP1, ..., SPx unter Berücksichtigung der besonderen Eigenschaften einer bestimmten Quantenverarbeitungseinheit optimal gelöst werden kann.

Das in Verbindung mit Fig. 1 beschriebene Vorgehen wird bei dieser Ausgestaltungsvariante für jedes Teilproblem SP1, ..., SPx getrennt voneinander ausgeführt. Das iterative Vorgehen ist insbesondere bei voneinander unabhängigen Teilproblemen durchführbar. Weisen die Teilprobleme eine Verschränkung untereinander auf, so wird die Verschränkung zwischen den verschiedenen Arten von Quantenverarbeitungseinheiten auch auf Hardware-Ebene realisiert.

Der Vorteil der Nutzung einer Analyseeinheit besteht darin, dass Quantenschaltungen mit unterschiedlichen Anforderungen, z.B. in Bezug auf Konnektivität und/oder Schaltungstiefe, auf der jeweils am besten geeigneten Quantenverarbeitungseinheit ausgeführt werden können, ohne dass ein Nutzer der Quantenschaltungen eine Einpassung an die Einschränkungen einer an sich angedachten Quantenverarbeitungseinheit vornehmen muss.

Sobald neue Technologien von Quantenverarbeitungseinheiten existieren oder die Eigenschaften von Quantenverarbeitungseinheiten verbessert werden, kann dies in aktualisieren Leistungsparametern in der Datenbank berücksichtigt werden.

Dies kann zu einer Änderung bei der Auswahl der am besten geeigneten Quantenverarbeitungseinheit für eine bestimmte Quantenschaltung führen, ohne dass der Benutzer die Entwicklung der Quantenhardware genauer verfolgen muss.

Das vorgeschlagene Vorgehen ist vorteilhaft, da die aktuell vorhandenen Ressourcen von Quantenverarbeitungseinheiten rar und teuer sind. Das Vorgehen nutzt die vorhandenen Ressourcen effizient und ermöglicht es einem Benutzer Probleme zielgerichteter zu lösen als mit einer generischen Quantenverarbeitungseinheit.

Unabhängig vom grammatikalischen Geschlecht eines bestimmten Begriffes sind Personen mit männlicher, weiblicher oder anderer Geschlechteridentität mit umfasst.

### Bezugszeichen

- 10: Analyseeinheit
- 12: Datenbank
- 20: Quantencomputer
- 21: Quantenverarbeitungseinheit
- 30: Quantencomputer
- 31: Quantenverarbeitungseinheit
- 30A: ausgewählter Quantencomputer
- 31A: ausgewählte Quantenverarbeitungseinheit
- 40: Quantencomputer
- 41: Quantenverarbeitungseinheit
- 42: Quantenverarbeitungseinheit
- P: zu lösendes Problem
- SOL: Lösung
- QS: Quantenschaltung
- KZ1,...KZn: Kennzahlen 1 ... n der Quantenschaltung
- SKZ: Satz an Kennzahlen
- LP(x): Leistungsparameter der Quantenverarbeitungseinheit x
- QP(x): Qualitätsparameter der Quantenverarbeitungseinheit x

## Patentansprüche

1. Verfahren zum computerimplementierten Verarbeiten einer Quantenschaltung (QS) auf einer Quantenverarbeitungseinheit, bei dem durch eine Analyseeinheit (10) die folgenden Schritte durchgeführt werden:
a) Ermitteln eines Satzes an Kennzahlen (SKZ) der Quantenschaltung (QS), wobei eine jeweilige Kennzahl (KZ1,...,KZn) eine Anforderung der Quantenschaltung (QS) an die Quantenverarbeitungseinheit (21, 31, 41, 42) zu deren Verarbeitung beschreibt;
b) Abbildung der Quantenschaltung (QS), jeweils auf eine erste Quantenverarbeitungseinheit (21) und zumindest eine zweite Quantenverarbeitungseinheit (31, 41, 42), wobei die erste Quantenverarbeitungseinheit (21) und die zumindest eine zweite Quantenverarbeitungseinheit (31, 41, 42) durch jeweilige, sich unterscheidende Leistungsparameter (LP(21), LP(31), LP(41, 42)) charakterisiert sind;
c) Bestimmen zumindest eines jeweiligen Qualitätsparameters (QP(21), QP(31), QP(41, 42)) für die erste Quantenverarbeitungseinheit (21) und die zumindest eine zweite Quantenverarbeitungseinheit (31, 41, 42) aus einer Abschätzung, indem eine Ausführung der Quantenschaltung (QS) auf der ersten Quantenverarbeitungseinheit (21) und der zumindest einen zweiten Quantenverarbeitungseinheit (31, 41, 42) simuliert und ein Maß für die Erfüllung der Kennzahlen (KZ1,...,KZn) des Satzes an Kennzahlen (SKZ) bestimmt wird;
d) Auswahl der ersten oder einer der zumindest einen zweiten Quantenverarbeitungseinheit (31, 41, 42) als ausgewählte Quantenverarbeitungseinheit (31A) abhängig vom Ergebnis eines Vergleichs der in Schritt c) bestimmten Qualitätsparameter (QP(21), QP(31), QP(41, 42));
e) Übertragung der Quantenschaltung (QS) an die ausgewählte Quantenverarbeitungseinheit (31A) zu dessen Verarbeitung.

2. Verfahren nach Anspruch 1, **dadurch gekennzeichnet, dass** der Satz an Kennzahlen (SKZ) eine oder mehrere der folgenden Eigenschaftsparameter umfasst: eine benötigte Prozessorleistung; einen benötigten Arbeitsspeicher; eine Anzahl an benötigten Qubits; Eigenschaften der Qubits.

3. Verfahren nach Anspruch 1 oder 2, **dadurch gekennzeichnet, dass** der Leistungsparameter (LP(21), LP(31), LP(41, 42)) der ersten sowie der zumindest einen zweiten Quantenverarbeitungseinheit (31, 41, 42) eine oder mehrere der folgenden Parameter umfasst: eine Prozessorleistung; einen Arbeitsspeicher; eine Anzahl an Qubits; Eigenschaften der Qubits; eine Vernetzungsrate der Qubits; eine Fehlerrate für jeweilige Gatter-Operationen; eine Kohärenzzeit.

4. Verfahren nach einem der vorhergehenden Ansprüche, **dadurch gekennzeichnet, dass** der Qualitätsparameter (QP(21), QP(31), QP(41, 42)) der ersten sowie der zumindest einen zweiten Quantenverarbeitungseinheit (31, 41, 42) eine oder mehrere der folgenden Parameter umfasst: eine erwartete Fehlerrate; eine Schaltungstiefe; eine Vernetzungsrate der Qubits; eine erwartete Dauer der Ausführung der Quantenschaltung (QS); eine Ergebnisqualität; erwartete Kosten für die Ausführung der Quantenschaltung (QS).

5. Verfahren nach Anspruch 4, **dadurch gekennzeichnet, dass** durch den Vergleich die Quantenverarbeitungseinheit (21, 31, 41, 42) mit dem besten Qualitätsparameter (QP(21), QP(31), QP(41, 42)) als ausgewählte Quantenverarbeitungseinheit (31A) bestimmt wird.

6. Verfahren nach einem der vorhergehenden Ansprüche, **dadurch gekennzeichnet, dass** die Leistungsparameter (LP(21), LP(31), LP(41, 42)) der ersten sowie der zumindest einen zweiten Quantenverarbeitungseinheit (31, 41, 42) aus einer Datenbank (12) eingelesen werden.

7. Verfahren nach einem der vorhergehenden Ansprüche, **dadurch gekennzeichnet, dass** die Leistungsparameter (LP(21), LP(31), LP(41, 42)) der ersten sowie der zumindest einen zweiten Quantenverarbeitungseinheit (31, 41, 42) aktualisiert werden.

8. Verfahren nach Anspruch 7, **dadurch gekennzeichnet, dass** die sich aus Schritt e) ergebende Lösung (SOL) zur Aktualisierung der Leistungsparameter (LP(21), LP(31), LP(41, 42)) der ausgewählten Quantenverarbeitungseinheit (31A) verarbeitet wird.

9. Verfahren nach einem der Ansprüche 1 bis 8, **dadurch gekennzeichnet, dass** die Quantenschaltung (QS) durch die Analyseeinheit (10) eingelesen wird.

10. Verfahren nach einem der Ansprüche 1 bis 8, **dadurch gekennzeichnet, dass** die Quantenschaltung (QS) durch die Analyseeinheit (10) aus einem zu lösenden Problem (P) generiert wird.

11. Verfahren nach einem der vorhergehenden Ansprüche, **dadurch gekennzeichnet, dass** ein zu lösendes Problem (P) in mehrere Teilprobleme aufgeteilt wird, wobei das Verfahren für jedes Teilproblem getrennt durchgeführt wird.

12. Verfahren nach Anspruch 11, **dadurch gekennzeichnet, dass** bei zwei verschränkten Teilproblemen eine Verschränkung der jeweils ausgewählten Quantenverarbeitungseinheiten vorgenommen wird.

13. Computerprogrammprodukt, umfassend Befehle, die bei der Ausführung des Programms durch einen Computer diesen veranlassen, das Verfahren gemäß einem der vorhergehenden Ansprüche auszuführen.

14. Vorrichtung zum computerimplementierten Verarbeiten einer Quantenschaltung (QS) auf einer Quantenverarbeitungseinheit, wobei eine Analyseeinheit (10) dazu ausgebildet ist, die folgenden Schritte durchzuführen:
a) Ermitteln eines Satzes an Kennzahlen (SKZ) der Quantenschaltung (QS), wobei eine jeweilige Kennzahl (KZ1,...,KZn) eine Anforderung der Quantenschaltung (QS) an die Quantenverarbeitungseinheit (21, 31, 41, 42) zu deren Verarbeitung beschreibt;
b) Abbildung der Quantenschaltung (QS), jeweils auf eine erste Quantenverarbeitungseinheit (21) und zumindest eine zweite Quantenverarbeitungseinheit (31, 41, 42), wobei die erste Quantenverarbeitungseinheit (21) und die zumindest eine zweite Quantenverarbeitungseinheit (31, 41, 42) durch jeweilige, sich unterscheidende Leistungsparameter (LP(21), LP(31), LP(41, 42)) charakterisiert sind;
c) Bestimmen zumindest eines jeweiligen Qualitätsparameters (QP(21), QP(31), QP(41, 42)) für die erste Quantenverarbeitungseinheit (21) und die zumindest eine zweite Quantenverarbeitungseinheit (31, 41, 42) aus einer Abschätzung, indem eine Ausführung der Quantenschaltung (QS) auf der ersten Quantenverarbeitungseinheit (21) und der zumindest einen zweiten Quantenverarbeitungseinheit (31, 41, 42) simuliert und ein Maß für die Erfüllung der Kennzahlen (KZ1,...,KZn) des Satzes an Kennzahlen (SKZ) bestimmt wird;
d) Auswahl der ersten oder einer der zumindest einen zweiten Quantenverarbeitungseinheit (31, 41, 42) als ausgewählte Quantenverarbeitungseinheit (31A) abhängig vom Ergebnis eines Vergleichs der in Schritt c) bestimmten Qualitätsparameter (QP(21), QP(31), QP(41, 42));
e) Übertragung der Quantenschaltung (QS) an die ausgewählte Quantenverarbeitungseinheit (31A) zu dessen Verarbeitung.
